(19) **Europäisches Patentamt**
**European Patent Office**
**Office européen des brevets**

(11) **EP 2 032 282 B1**

(12) **EUROPÄISCHE PATENTSCHRIFT**

(45) Veröffentlichungstag und Bekanntmachung des Hinweises auf die Patenterteilung:
**21.10.2009   Patentblatt 2009/43**

(21) Anmeldenummer: 07785829.8

(22) Anmeldetag: **19.06.2007**

(51) Int Cl.:
**B21J 15/02** *(2006.01)*        **F16B 19/08** *(2006.01)*
**B21J 15/34** *(2006.01)*

(86) Internationale Anmeldenummer:
**PCT/EP2007/005376**

(87) Internationale Veröffentlichungsnummer:
**WO 2007/147551 (27.12.2007 Gazette 2007/52)**

(54) **STANZNIET UND MATRIZE**

PUNCH RIVET AND DIE

RIVET AUTO-POINÇONNEUR ET MATRICE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.06.2006   DE 102006028537**

(43) Veröffentlichungstag der Anmeldung:
**11.03.2009   Patentblatt 2009/11**

(73) Patentinhaber: **Singh, Sumanjit**
**85080 Gaimersheim (DE)**

(72) Erfinder:
• **WENZL, Wolfgang**
**4926 Sankt Marienkirchen (AT)**

• **SINGH, Sumanjit**
**D-85080 Gaimersheim (DE)**

(74) Vertreter: **Wirnsberger, Gernot**
**Mühlgasse 3**
**8700 Leoben (AT)**

(56) Entgegenhaltungen:
WO-A-02/02259              DE-A1- 4 333 052
DE-U1- 20 319 610        DE-U1-202005 012
677
ZA-A- 9 108 340

**Beschreibung**

Die vorliegende Erfindung betrifft einen Stanzniet, der als einfacher Niet oder auch als Funktionselement wie zum Beispiel als Stanzbolzen oder Stanzmutter ausgebildet sein kann. Insbesondere betrifft die Erfindung einen Stanzniet in Form eines Halbhohlstanznietes oder Hohlstanznietes zum Herstellen einer Stanznietverbindung mit einem oder mehreren plattenförmigen Fügeteilen (Blechen). Die Erfindung betrifft ferner eine bei der Herstellung der Stanznietverbindung verwendbare Matrize. Die Matrize ist vorzugsweise in spezieller Weise an die Geometrie des Stanznietes angepasst, kann jedoch auch in Verbindung mit herkömmlichen Stanznieten verwendet werden.

Das Stanznieten als Fügeverfahren hat in der jüngeren Vergangenheit zunehmend an Bedeutung gewonnen. Ein wichtiger Parameter für den Fügevorgang sowie die Verbindungsqualität der Stanznietverbindung ist die Geometrie des Stanznietes. Im Stand der Technik sind zahlreiche unterschiedliche Geometrien des Stanznietes bekannt, siehe z. B. DE 43 33 052 (mit Familienmitglied EP 0 720 695), EP 1 064 466 (mit Familienmitglied. DE 200 01 103 U1), EP 1 229 254, EP 1 387 093 mit Familienmitglied US 2004/0068854 A1, DE 44 31 769, DE 203 19 610 U1, JP 2001159409A. JP 09317730A u. a. Auf der DE 43 33 052 basiert der Oberbegriff der Ansprüche 1 und 2; auf der ZA 9 108 340 basiert der Oberbegriff der Ansprüche 19, 20, 23, 24 und 25.

Der Stanzniet nach der oben genannten EP 0 720 695, welcher üblicherweise als C-Niet bezeichnet wird, wird in großem Umfang in der Kraftfahrzeugindustrie, aber auch in anderen technischen Bereichen eingesetzt. Es handelt sich um einen Halbhohlstanzniet mit einem Nietkopf und einem Nietschaft mit einer zentralen Schaftbohrung, von denen der Nietkopf eine ebene Oberseite und eine zylindrische Kopfaußenfläche und der Nietschaft eine zylindrische Schaftaußenfläche und eine die zentrale Schaftbohrung begrenzende zylindrische Schaftinnenfläche hat. Die zylindrische Kopfaußenfläche und die zylindrische Schaftaußenfläche sind durch einen relativ großen Radius unmittelbar miteinander verbunden. Im Fußbereich des Stanznietes ist die zentrale Schaftbohrung als Konus ausgebildet, wobei die Konusflanken nach Angaben in dieser Druckschrift leicht gewölbt sein sollen. Hierdurch wird im Rahmen der fertigungstechnisch gegebenen Möglichkeiten quasi eine "scharfe Kante" am Außenrand des Nietschaftes geschaffen, die in der Praxis im Allgemeinen etwas angefast ist. Nach den Angaben in dieser Druckschrift kann der Öffnungswinkel des Konus zwischen 25° und 120° liegen.

Bei der Gestaltung von Stanznieten ging man im Stand der Technik üblicherweise von dem so genannten "Pierce-and-Roll"-Verhalten der Stanzniete aus. "Pierce-and-Roll" bedeutet, dass der Stanzniet möglichst bald nach dem Eindringen (pierce) in das untere Blech gespreizt wird (roll), um eine größtmögliche Verspreizung und somit einen größtmöglichen Hinterschnitt des Stanznietes in der Stanznietverbindung zu erreichen. Diese Überlegungen haben zu Nietgeometrien wie beispielsweise derjenigen des C-Nietes und entsprechenden Matrizen, zum Beispiel mit Dorn, geführt.

Wenngleich sich der C-Niet in der Praxis als erfolgreich erwiesen hat, sind weitere Verbesserungen wie z. B. ein verbessertes Tragverhalten der Stanznietverbindung und eine verbesserte Wirtschaftlichkeit des Fügeverfahrens wünschenswert.

Der vorliegenden Erfindung liegt die Aufgabe zugrunde, einen Stanzniet zum Herstellen einer Stanznietverbindung mit einem oder mehreren Fügeteilen zu schaffen, der eine Optimierung des Tragverhaltens der Stanznietverbindung sowie ein besonders wirtschaftliches Fügeverfahren, insbesondere durch Herabsetzung der Anforderungen an die Festigkeit und Härte des Stanzniet-Werkstoffes und eine Reduzierung der für den Fügevorgang erforderlichen Setzkräfte, erlaubt. Ferner soll eine hierfür geeignete Matrize geschaffen werden, die vorzugsweise an die Geometrie des erfindungsgemäß ausgebildeten Stanznietes angepasst ist, jedoch auch in Verbindung mit anderen Nietgeometrien verwendet werden kann.

Stanzniete gemäß der vorliegenden Erfindung zur Lösung dieser Aufgabe sind in den Patentansprüchen 1 und 2 definiert.

Der erfindungsgemäß ausgebildete Stanzniet ist insbesondere gekennzeichnet durch eine spezielle Nietfußgeometrie und eine spezielle Unterkopfgeometrie, wie sie sich aus den Patentansprüchen 1 und 2 ergeben.

Gemäß der Lösung des Patentanspruchs 1 sind die Schaftaußenfläche und Schaftinnenfläche am Nietfußende durch einen radial äußeren ersten Radius $R_1$ und einen radial inneren zweiten Radius $R_2$ verbunden, die tangential ineinander übergehen. Die gemeinsame Tangente von $R_1$ und $R_2$ schließt mit einer Radialebene des Stanznietes einen Winkel $\alpha$ von 10° $\pm$ 20°, ein. Der erste Radius $R_1$, der tangential in die Schaftaußenfläche übergeht beträgt 0,3 $\pm$ 0,2 mm und der zweite Radius $R_2$, der tangential in die Schaftinnenfläche übergeht, beträgt (0,7 bis 1,2) $(d_N\text{-}d_i)/2$, insbesondere (0,8 bis 1,0) $(d_N\text{-}d_i)/2$. Der Faktor (0,7 bis 1,2) bzw. (0,8 bis 1,0) wird vorzugsweise mit größer werdendem $R_1$ zunehmend größer gewählt.

Falls sich mit innerhalb der angegebenen Wertebereiche gewählten Radien $R_1$ und $R_2$ ergibt, dass sich kein zweiter Radius $R_2$ finden lässt, der sowohl den ersten Radius $R_1$ wie auch die Schaftinnenfläche tangiert, wird gemäß der alternativen Lösung des Anspruchs 2 zwischen dem zweiten Radius $R_2$ und der Schaftinnenfläche ein dritter Radius $R_3$ vorgesehen, der tangential sowohl in den zweiten Radius $R_2$ wie auch in die Schaftinnenfläche übergeht und der 0,8 $\pm$ 0,4 mm beträgt. Der Winkel a zwischen der gemeinsamen Tangente von $R_1$, $R_2$ und einer Radialebene des Stanznietes ist dann im Bereich von 5° $\pm$ 10° zu wählen.

Die Geometrie im Unterkopfbereich des Nietkopfes ist bei beiden Lösungen dadurch charakterisiert, dass die Kopfaußenfläche und die Schaftaußenfläche durch eine konische oder leicht gekrümmte Unterkopffase und einen Unterkopfradius verbunden sind, von denen der Unterkopfradius tangential sowohl in die Unterkopffase wie auch die Schaftaußenfläche übergeht. Im Fall einer konischen Unterkopffase schließt die Unterkopffase mit einer Radialebene des Stanznietes einen Winkel $\beta$ von 25° $\pm$ 10°, insbesondere 25° $\pm$ 7° ein. Im Fall einer leicht gekrümmten Unterkopffase gilt für den Krümmungsradius $R_7 \geq 2{,}0$ mm.

Die Stanznietgeometrie gemäß der Erfindung bedeutet eine Abkehr von dem vorstehend erläuterten "Pierce-and-Roll"-Verhalten des Stanznietes. Wie anhand der Figuren noch genauer erläutert wird, geht die vorliegende Erfindung von der Erkenntnis aus, dass zusätzlich zu den Qualitätskriterien des Hinterschnittes des gespreizten Stanznietabschnittes und der axialen Mindestdicke des matrizenseitigen Fügeteils (Bleches) am Nietfuß weitere Qualitätskriterien der Stanznietverbindung zum Erzielen eines optimalen Tragverhaltens heranzuziehen sind. Hierbei handelt es sich, wie anhand der Figuren noch genauer erläutert wird, um die so genannte Eingriffslänge L (Eingriff zwischen Außenfläche des Nietfußes und dem matrizenseitigen Fügeteil), die so genannte Tragtiefe T (axiale Komponente der Eingriffslänge L) und die radiale Dicke $t_{NF}$ des den Nietfuß umschließenden matrizenseitigen Fügeteils.

Die Nietgeometrie wurde gemäß der Erfindung so gewählt, dass die Eingriffslänge L, die Tragtiefe T und die Dicke $t_{NF}$ der Stanznietverbindung maximiert werden. Die Überlegung hierbei ist, dass sich das Tragverhalten der Stanznietverbindung verbessern lässt, wenn eine Maximierung des Hinterschnittes des aufgespreizten Stanznietabschnittes zugunsten eines verbesserten "Kraftschlusses" zwischen dem Nietschaft und dem matrizenseitigen Fügeteil (Blech) aufgegeben wird. Ein verbesserter "Kraftschluss" ergibt sich durch eine Vergrößerung der sich im Eingriff befindenden Querschnitte und Außenflächen des Stanznietes einerseits und der Fügeteile andererseits, wodurch die spezifische Belastung der kraftübertragenden Bereiche minimiert wird. Dies führt außerdem zu einer Verringerung der radialen Druckspannungen, so dass bei äußerer Belastung der Stanznietverbindung die Größe der sich aus der Überlagerung ergebenden Gesamtspannungen in Grenzen bleibt. Aufgrund der durch die Erfindung erreichten Maximierung der Eingriffslänge L, der Tragtiefe T und der Dicke $t_{NF}$ bei hinreichendem Hinterschnitt des aufgespreizten Stanznietabschnittes und minimaler axialer Fügeteildicke $t_{min}$ wird die Flächenpressung zwischen Stanzniet und Fügeteilen verringert, was wiederum die Steifigkeit und Ermüdungsfestigkeit der Stanznietverbindung verbessert. Die Nietfußgeometrie gemäß der vorliegenden Erfindung führt ferner dazu, dass beim Fügevorgang der Stanzniet das stempelseitige Fügeteil im Wesentlichen in einem Schneidvorgang durchdringt und dass der Nietschaft erst beim Eindringen in das matrizenseitige Fügeteil gespreizt wird. Hierbei kommt es zu einem widerstandsärmeren Gleiten des Nietfußes entlang der Fügeteile. Dieser Sachverhalt führt zu einer Minimierung der erforderlichen Setzkraft, was wiederum zur Folge hat, dass die Anforderungen an die Härte und Festigkeit des Stanzniet-Werkstoffes deutlich verringert und die Herstellung und Verarbeitung der Stanzniete einfacher und erheblich billiger werden.

In weiterer Ausgestaltung der Erfindung ist eine speziell dimensionierte Matrize für den erfindungsgemäß ausgebildeten Stanzniet vorgesehen. Eine erfindungsgemäß ausgebildete Matrize ist in Anspruch 19 definiert. Hiernach gilt für den Matrizendurchmesser

$$D_M = d_N + (0{,}6 \text{ bis } 1{,}5)\, 2t_M, \text{ insbesondere } d_N + (0{,}7 \text{ bis } 1{,}2)\, 2t_M$$

für Fügeteile aus einem Werkstoff guter Verformungsfähigkeit, insbesondere aus einer Knetlegierung, und

$$D_M \leq 2{,}2\, d_N$$

für Fügeteile aus einem Gusswerkstoff oder anderem Werkstoff geringer Verformungsfähigkeit, wobei $d_N$ der Schaftaußendurchmesser des Nietschaftes und $t_M$ die Dicke des matrizenseitigen Fügeteils ist. Die Tiefe $T_M$ für Fügeteile aus einem Werkstoff guter Verformungsfähigkeit liegt vorzugsweise im Bereich $T_M = (1{,}0 \text{ bis } 2{,}5)\, t_M$, insbesondere $T_M = (1{,}1 \text{ bis } 2{,}2)\, t_M$. Die Tiefe $T_M$ für Fügeteile aus Werkstoffen geringer Verformungsfähigkeit ist vorzugsweise $\leq 0{,}15\, D_M$ und/oder $\leq t_M$.

Aus diesen Formeln ergibt sich, dass der Matrizendurchmesser kleiner als im Stand der Technik ist. Der kleinere Matrizendurchmesser wiederum begünstigt die angestrebte Verringerung der Aufspreizung des Nietschaftes.

Gemäß Anspruch 20 ist eine erfindungsgemäß ausgebildete Matrize dadurch gekennzeichnet, dass die Matrize am Matrizenboden eine zentrale Vertiefung aufweist, die beim Fügevorgang für Druckentlastung beim Fügevorgang sorgt.

Der erfindungsgemäß ausgebildete Stanzniet ist besonders geeignet zum Fügen von Fügeteilen aus höherfesten Stählen, insbesondere AHSS-Stählen sowie metastabilen austenitischen Stählen wie z. B. H400. Grundsätzlich ist der Stanzniet jedoch zum Fügen von Fügeteilen aus beliebigen Werkstoffen einschließlich Kunststoff geeignet. Der Stanzniet kann aus herkömmlichen Werkstoffen bestehen, wobei jedoch, wie erwähnt, Härte und Festigkeit des Werkstoffes deutlich geringer als im Stand der Technik sein können. Die durch die Erfindung ermöglichte Reduzierung der erforderlichen Setzkräfte und die erhebliche Verbesserung des Tragverhaltens ermöglichen es beispielsweise, dass mit der beanspruchten Nietgeometrie sogar Niete aus Aluminiumlegierungen wie z. B. AlMgSi1 T6/T7 für das Vernieten von Aluminiumhalbzeugen geeignet sind.

Der erfindungsgemäß ausgebildete Stanzniet kann ein Halbhohlstanzniet (bei dem die zentrale Schaftbohrung eine Sackbohrung ist) oder ein Hohlstanzniet (bei dem die zentrale Schaftbohrung eine durchgehende Bohrung ist) sein. Bei dem Stanzniet kann es sich um einen reinen Niet oder auch um ein Funktionselement, insbesondere einen Stanzbolzen oder eine Stanzmutter handeln.

Der Nietschaft kann eine zylindrische Schaftaußenfläche oder auch eine axial geriffelte Schaftaußenfläche haben. Die axiale Riffelung dient als Verdrehsicherung beim Fügevorgang, insbesondere wenn der Stanzniet als Funktionselement ausgebildet ist. Die axiale Riffelung der Schaftaußenfläche erfordert keine zusätzlichen Fügekräfte. Dies ist von Vorteil gegenüber sternförmigen Riffelungen unter dem Nietkopf, wie sie aus dem Stand der Technik bekannt sind.

Wenn der Stanzniet als Funktionselement ausgebildet ist, kann er auch in Verbindung mit einem einzelnen Fügeteil (Blech) verwendet werden.

Der Nietkopf ist vorzugsweise als Senkkopf ausgebildet. Je nach Anwendungsfall kann jedoch auch ein Flachkopf verwendet werden.

Weitere vorteilhafte Ausgestaltungen und Weiterbildungen der Erfindung sind in den abhängigen Patentansprüchen definiert.

Anhand der Zeichnungen werden weitere Einzelheiten der Erfindung sowie bevorzugte Ausführungsformen der Erfindung erläutert. Es zeigt:

Fig. 1 einen Axialschnitt eines erfindungsgemäß ausgebildeten Stanzniets;
Fig. 2 einen halben Axialschnitt durch eine fertige Stanznietverbindung zum Veranschaulichen bestimmter Qualitätskriterien der Stanznietverbindung;
Fign. 3 bis 6 schematische Darstellungen eines Stanznietvorganges in unterschiedlichen Betriebsphasen;
Fig. 7 eine Schnittdarstellung eines Teils einer modifizierten Matrize;
Fig. 8 einen Axialschnitt durch eine abgewandelte Ausführungsform des Stanznietes;
Fig. 9 einen Querschnitt in Blickrichtung der Pfeile IX-IX in Fig. 8.

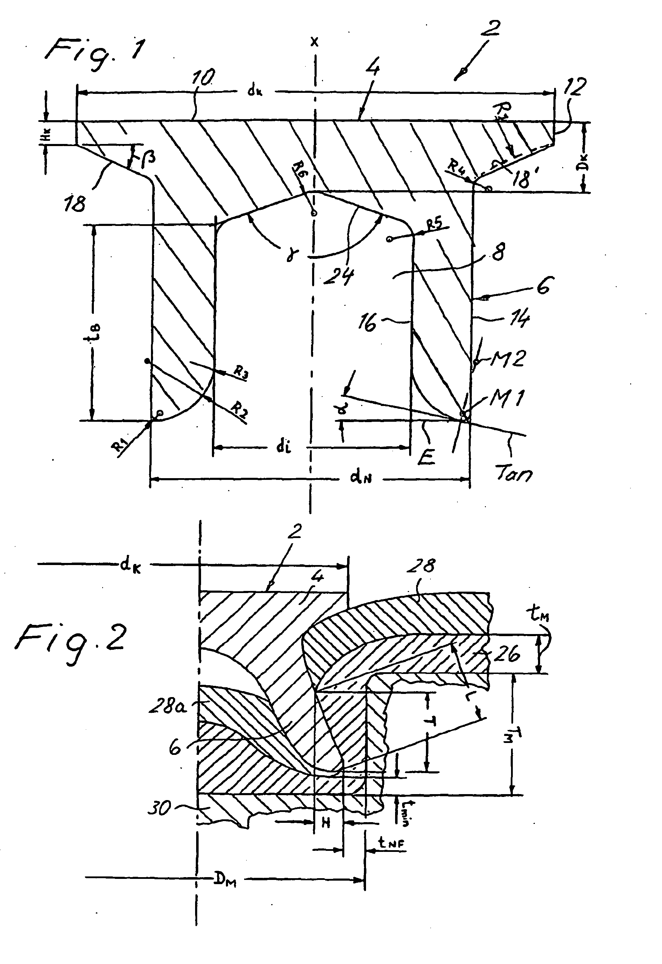

Anhand der Fig. 1 wird ein konkretes Ausführungsbeispiel eines erfindungsgemäß ausgebildeten Halbhohlstanznietes beschrieben.

Der Stanzniet 2 ist bezüglich einer zentralen Achse X rotationssymmetrisch ausgebildet und besteht aus einem Nietkopf 4 und einem Nietschaft 6 mit einer zentralen Schaftbohrung 8, die als Sackbohrung ausgebildet ist. Der Nietkopf 4 hat eine plane Oberseite 10 und eine zylindrische Kopfaußenfläche 12. Die Kopfaußenfläche 12 hat einen Durchmesser $d_K$ und eine axiale Höhe $H_K$.

Der Nietschaft 6 hat eine zylindrische Schaftaußenfläche 14 und eine zylindrische Schaftinnenfläche 16, welche die Schaftbohrung 8 begrenzt. Die zylindrische Schaftaußenfläche 14 hat einen Schaftaußendurchmesser $d_N$, und die zylindrische Schaftinnenfläche hat einen Schaftinnendurchmesser $d_i$.

Die Kopfaußenfläche 12 ist mit der Schaftaußenfläche 14 über eine Unterkopffase 18 und einen Radius $R_4$ verbunden (unter dem Begriff "Radius" ist im vorliegenden Rahmen eine Ringfläche zu verstehen, die in einem Axialschnitt die Form eines Kreisbogens mit dem Radius R hat).

Der Radius $R_4$ verläuft tangential sowohl in die Unterkopffase 18 wie auch in die Schaftaußenfläche 14, während die Unterkopffase 18 an der Kopfaußenfläche 12 (z. B. über einen Radius oder eine scharfe Kante) unmittelbar angrenzt. Die Unterkopffase 18 schließt mit einer Radialebene des Stanznietes 2 einen Winkel β ein.

Am Nietfußende ist die Schaftaußenfläche 14 mit der Schaftinnenfläche 16 über einen ersten Radius $R_1$ mit dem Mittelpunkt M1 und einen zweiten Radius $R_2$ mit dem Mittelpunkt M2 sowie ggf. über einen dritten Radius $R_3$ verbunden. Der Radius $R_1$ geht tangential sowohl in die Schaftaußenfläche 14 wie auch in den zweiten Radius $R_2$ über. Der zweite Radius $R_2$ geht tangential entweder unmittelbar in die Schaftinnenfläche 16 oder in den dritten Radius $R_3$ über, welcher wiederum tangential in die Schaftinnenfläche 16 übergeht.

Wie in Fig. 1 deutlich zu sehen ist, ist der Radius $R_1$ wesentlich kleiner als der Radius $R_2$. Die gemeinsame Tangente Tan der Radien $R_1$ und $R_2$, die auf der Verbindenden der Mittelpunkte M1 und M2 senkrecht steht, schließt mit einer Radialebene E des Stanznietes 2 einen Winkel α ein.

Die Schaftbohrung 8 weist am Nietkopfende eine konische Bodenfläche 24 eines Konuswinkels γ auf, die durch einen äußeren Schaftbohrungsradius $R_5$ mit der Schaftinnenfläche 16 verbunden ist und im Bereich der zentralen Achse X in einem Radius $R_6$ endet. Die Schaftbohrung 8 hat eine Schaftbohrungstiefe $t_B$, die vom Nietfußende bis zu der Stelle gemessen wird, an der sich die gedachten Verlängerungen der konischen Bodenfläche 24 und der Schaftinnenfläche 16 einander schneiden. Die Dicke des Nietkopfes 12 auf der zentralen Achse X ist mit $D_K$ bezeichnet.

Bevor nun auf die konkreten Wertebereiche der die Geometrie des erfindungsgemäßen Stanznietes bestimmenden Größen eingegangen wird, werden unter Bezugnahme auf Fig. 2 die grundlegenden Überlegungen skizziert, die zu der vorliegenden Erfindung geführt haben. Wie bereits eingangs erläutert, wurden im Stand der Technik bei der Beurteilung einer fertigen Stanznietverbindung zum einen der Hinterschnitt H des gespreizten Nietschaftabschnittes und zum anderen die axiale Mindestdicke $t_{min}$ des matrizenseitigen Fügeteils (Blechs) als Qualitätskriterium herangezogen. Grundsätzlich war man bestrebt, den Hinterschnitt H und die Mindestdicke $t_{min}$ so groß wie möglich zu machen.

Im Gegensatz hierzu geht die vorliegende Erfindung von der Überlegung aus, dass zusätzlich zu dem Hinterschnitt H und der Mindestdicke $t_{min}$ die Eingriffslänge L, die Tragtiefe T und die radiale Dicke $t_{NF}$ des den Nietfuß umschließenden Fügeteiles (Bleches) wesentliche Qualitätskriterien der Stanznietverbindung sind. Wie aus Fig. 2 hervorgeht, handelt es sich bei der Eingriffslänge L um die Länge des Eingriffs zwischen der Außenseite des Nietschaftes 6 und dem matrizenseitigen Fügeteil 26 und die Tragtiefe T ist die axiale Komponente der Eingriffslänge L. Die radiale Dicke $t_{NF}$ des den Nietfuß umschließenden matrizenseitigen Fügeteils 26 wird an der radial äußersten Stelle des Nietfußes gemessen.

Gemäß der Lehre der vorliegenden Erfindung wird grundsätzlich angestrebt, die Eingriffslänge L, die Tragtiefe T und die radiale Dicke $t_{NF}$ zu maximieren. Wie anhand umfangreicher Untersuchungen festgestellt wurde, lässt sich auf diese Weise das Tragverhalten der Stanznietverbindung verbessern und optimieren, wie im Folgenden noch genauer erläutert wird.

Weitere der Erfindung zugrunde liegende Überlegungen betreffen die Gestaltung des Nietkopfes, des Nietschaftes und der zur Herstellung der Nietverbindung verwendeten Matrize, wie im Folgenden ebenfalls genauer erläutert wird.

Gestaltung des Nietfußes

Die Geometrie des Nietfußes gemäß dem dargestellten Ausführungsbeispiel der vorliegenden Erfindung ist durch die folgenden Wertebereiche bestimmt:

$$R_1 = 0,3 \pm 0,2 \text{ mm}$$

$$R_2 = (0,7 \text{ bis } 1,2)\,(d_N\text{-}d_i)/2, \text{ insbesondere } R_2 = (0,8 \text{ bis } 1,0)\,(d_N\text{-}d_i)/2$$

$$\alpha = 10° \pm 20°.$$

Nicht im Rahmen der Erfindung kann der Radius $R_1$ durch eine Fase von beispielsweise 45° ersetzt werden, solange die Länge der Fase nicht größer ist als die entsprechende Sekante des Radius $R_1$.

Diese Wertebereiche gelten für den Fall, dass der Radius $R_2$ unmittelbar tangential in die Schaftinnenfläche 16 übergeht. Falls sich innerhalb des angegebenen Wertebereiches kein Radius $R_2$ finden lässt, der sowohl den Radius $R_1$ wie auch die Schaftinnenfläche 16 tangiert, ist der Radius $R_2$ über einen weiteren Radius $R_3$ mit der Schaftinnenfläche zu verbinden. Für $R_3$ und den Winkel $\alpha$ sind dann die folgenden Wertebereiche zu wählen:

$$\alpha = 5° \pm 10°$$

$$R_3 = 0,8 \pm 0,4 \text{ mm.}$$

Ist der Radius $R_1$ kleiner gleich 0,2 mm, so beträgt zweckmäßigerweise der Winkel $\alpha = 5° \pm 10°$. Bei größerem Radius $R_1$ (bis 0,4 mm) kann der Winkel $\alpha = 10° \pm 20°$ betragen.

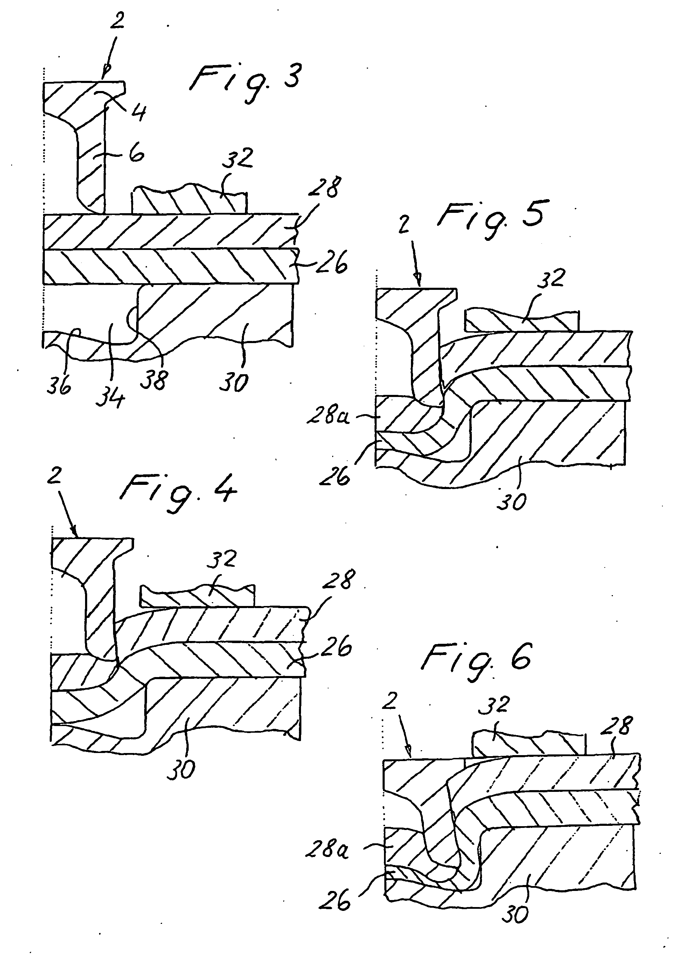

Ein wesentlicher Parameter der Geometrie des Nietfußes ist der Winkel $\alpha$, den die gemeinsame Tangente Tan der Radien $R_1$ und $R_2$ mit der Radialebene E des Stanznietes einschließt. Wie dargestellt und sich aus den angegebenen Wertebereichen ergibt, ist der Winkel α sehr klein und kann sogar negativ sein. Dies verdeutlicht, dass der Nietfuß im Gegensatz zum Stand der Technik gewissermaßen stumpf ausgebildet ist, d. h. keine scharfkantige Schneide im engeren Sinne aufweist. Dieser Sachverhalt hat einen wesentlichen Einfluss auf den Stanznietvorgang und die Ausbildung der Stanznietverbindung, wie nun am Beispiel einer Stanznietverbindung zwischen zwei Fügeteilen (Blechen) unter Bezugnahme auf die Fig. 3 bis Fig. 6 erläutert wird:

Beim Stanznieten werden bekanntlich die zu fügenden Fügeteile 26, 28 zwischen der Oberseite einer Matrize 30 und der Unterseite eines Niederhalters 32 gehalten. Die Matrize 30 hat einen Hohlraum 34, der von einer Bodenfläche 36, vorzugsweise in Form eines Vorsprungs (Dorns) und einer zylindrischen Umfangsfläche 38 begrenzt wird. Beim Fügevorgang wird der Stanzniet 2 von einem Stempel (nicht gezeigt) in die Fügeteile 26, 28 gedrückt, und hierbei werden verformte Abschnitte der Fügeteile 26, 28 in den Hohlraum 34 der Matrize 30 hineinverformt. Der Stanzniet durchstanzt das stempelseitige Fügeteil 28, trennt hierbei einen Butzen 28a vom Fügeteil 28 ab, und verformt das matrizenseitige Fügeteil, ohne dieses zu durchstanzen. Hierdurch wird eine Art "Schließkopf" gebildet, so dass die beiden Fügeteile 26, 28 zwischen dem Nietkopf 4 und dem "Schließkopf" formschlüssig zusammengehalten werden.

Die vorstehend definierte Geometrie des Nietfußes hat die folgenden Auswirkungen auf den Fügevorgang und die Ausbildung der Stanznietverbindung:

a) Im ersten Teil des Fügevorganges durchstanzt der Nietfuß das stempelseitige Fügeteil 28 ohne übermäßige Verformung des Fügeteils 28. Es handelt sich also weitgehend um einen reinen Stanz- bzw. Schneidvorgang.

b) Da bei diesem Stanzvorgang der Nietfuß das stempelseitige Fügeteil 28 im Wesentlichen in einem Schneidvorgang durchdringt, erleiden der Nietfuß und der Nietschaft keine größere Verformung. Dies wird durch die Fig. 4 und Fig. 5 veranschaulicht. Die Folge ist, dass die zum Durchstanzen des stempelseitigen Fügeteils 28 erforderliche Setzkraft vergleichsweise gering ist.

c) Der Nietfuß drückt nun den durchstanzten Butzen 28a zusammen mit dem matrizenseitigen Fügeteil 26 nach unten in den Hohlraum 34 der Matrize 30, bis das untere Fügeteil 26 an einer Bodenfläche 36 der Matrize 30 anliegt.

d) Wenn der Nietfuß das stempelseitige Fügeteil 28 durchstanzt hat, "gleitet" der Nietfuß auf der Oberfläche des Butzens 28a radial nach außen und axial nach unten, so dass der Werkstoff des Butzens 28a innerhalb der Schaftbohrung 8 radial nach innen fließgepresst und das matrizenseitige Fügeteil 26 radial nach außen und axial zum Matrizenboden hin verformt wird (Figuren 5, 6). Hierbei entsteht der Hinterschnitt H (Fig. 2). Das matrizenseitige Fügeteil 26 umschließt den Nietfuß, ohne dass das matrizenseitige Fügeteil radial und axial zu stark ausgedünnt oder gar durchschnitten wird.

Kurz gesagt, ist somit der Fügevorgang dadurch charakterisiert, dass das stempelseitige Fügeteil 28 weitgehend in einem reinen Schneidvorgang durchstanzt wird, ohne dass der Nietschaft 6 und das stempelseitige Fügeteil 28 übermäßig verformt werden, und dass das Aufweiten (Spreizen) des Nietschaftes 6 erst beim Eindringen in das matrizenseitige Fügeteil 26 erfolgt. Hierdurch wird erreicht, dass die Eingriffslänge L, die Tragtiefe T und die radiale Dicke $t_{NF}$ des den Nietfuß umschließenden matrizenseitigen Fügeteils 26 maximiert werden.

Die Folge ist, dass der Kraftschluss (Reibschluss) zwischen dem Nietschaft 6 und den Fügeteilen 26, 28 einen wesentlichen Beitrag zum Tragverhalten liefert. Insbesondere wird hierdurch die spezifische Belastung der kraftübertragenden Bereiche zwischen dem Stanzniet 2 und den Fügeteilen 26, 28 minimiert. Außerdem ergibt sich eine Verringerung der radialen Druckspannungen innerhalb der Stanznietverbindung, so dass bei einer äußeren Belastung der Stanznietverbindung die Summe aus äußeren und inneren Spannungen in vertretbaren Grenzen bleibt. Ferner wird durch die Maximierung von L, T und $t_{NF}$ bei ausreichendem Hinterschnitt H und Mindestdicke $t_{min}$ die Flächenpressung zwischen dem Stanzniet 2 und den Fügeteilen 26, 28 verringert, wodurch die Steifigkeit und Ermüdungsfestigkeit der Stanznietverbindung verbessert werden.

Ein weiterer wichtiger Vorteil dieser Ausgestaltung der Stanznietverbindung besteht, wie bereits erwähnt, in einer signifikanten Verringerung der zum Herstellen der Stanznietverbindung erforderlichen Setzkraft. Dies wirkt sich nicht nur vorteilhaft auf die Gestaltung und den Betrieb des Setzwerkzeuges aus, sondern führt vor allem dazu, dass die Anforderungen an die Härte und Festigkeit der Stanzniete deutlich reduziert werden. So können zum Herstellen einer Stanznietverbindung zwischen Fügeteilen vorgegebener Werkstoffe Stanzniete verwendet werden, deren Härte und Festigkeit wesentlich geringer als im Stand der Technik sind. Beispielsweise lassen sich Niete aus herkömmlichen Aluminiumlegierungen wie z. B. AlMgSi1 für das Nieten von Aluminiumhalbzeugen verwenden.

Ein weiterer Vorteil der beschriebenen Ausbildung der Stanznietverbindung besteht darin, dass Spalte zwischen dem Stanzniet einerseits und den Fügeteilen andererseits sowie zwischen den Fügeteilen untereinander vermieden oder zumindest minimiert werden. Dies wirkt sich, zusammen mit den übrigen Eigenschaften der Stanznietverbindung, vorteilhaft auf das Tragverhalten und insbesondere das Schwingfestigkeitsverhalten der Stanznietverbindung aus.

Gestaltung des Nietkopfes

Die Gestaltung des Nietfußes ist in Verbindung mit der Gestaltung des übrigen Stanznietes, insbesondere des Nietkopfes, des Nietschaftes und der Schaftbohrung zu sehen.

Im dargestellten Ausführungsbeispiel ist der Nietkopf 4 als Senkkopf mit einer konischen Unterkopffase 18 ausgebildet, die mit der Schaftaußenfläche 14 durch den Radius $R_4$ verbunden ist und die zylindrische Kopfaußenfläche 12 schneidet.

Für den Kopfdurchmesser $d_K$ des als Senkkopf ausgebildeten Nietkopfes 4 gilt:

$$d_K = (1,3 \text{ bis } 1,8)\, d_N, \text{ insbesondere } d_K = (1,4 \text{ bis } 1,65)\, d_N.$$

Für die axiale Länge $H_K$ der Kopfaußenfläche 12 gilt:

$$H_K = (0,025 \text{ bis } 0,2)\, d_N, \text{ insbesondere } H_K = (0,025 \text{ bis } 0,12)\, d_N.$$

Mit größer werdendem Kopfdurchmesser $d_K$ ist $H_K$ größer zu wählen. Die angegebenen Bereiche gelten insbesondere für Schaftaußendurchmesser $d_N \leq 6$ mm.

Der Winkel β, den die Unterkopffase 18 mit einer Radialebene einschließt, liegt im Bereich von 25° ± 10°, insbesondere 25° ± 7°. Der Radius $R_4$ beträgt 0,6 ± 0,4 mm, insbesondere 0,5 ± 0,2 mm.

Die Unterkopffase kann, wie auf der rechten Seite der Fig. 1 gestrichelt angedeutet, auch leicht gekrümmt ausgebildet werden, wobei die Krümmung nur geringfügig von der konischen Fläche abweichen und der Krümmungsradius $R_7 \geq 2,0$ mm betragen sollte.

Der Winkel β bzw. der Radius $R_7$ und der Radius $R_4$ sind hierbei so gewählt, dass die Kraft zum Schließen des Spaltes zwischen dem Nietkopf 4 und dem stempelseitigen Fügeteil 28 (Fig. 2 und Fig. 6) und damit die Setzkraft möglichst niedrig ist. Die Größe der Setzkraft wird maßgeblich durch den Unterschied zwischen dem Winkel β bzw. dem Radius $R_7$ der Unterkopffase 18 und dem entsprechenden Winkel der Oberseite des durchstanzten stempelseitigen Fügeteils 28 sowie durch die Größe des Radius $R_4$ beeinflusst.

Ist der Winkel β zu groß bzw. der Radius $R_7$ zu klein, ist eine sehr hohe Setzkraft erforderlich, um den Spalt zwischen Kopfunterseite und stempelseitigem Fügeteil 28 zu schließen. Ist der Winkel β zu klein, entsteht ein Spalt zwischen dem Stanzniet 2 und dem stempelseitigen Fügeteil 28 im Bereich des Radius $R_4$. Der Nietkopf 4 wird dann auf Biegung belastet und kann leicht abbrechen, wenn versucht wird, diesen Spalt durch eine entsprechend große Setzkraft zu schließen.

Wird der Radius $R_4$ zu groß gewählt (wie dies im Stand der Technik beispielsweise bei dem so genannten C-Niet der Fall ist), so muss der Stanzniet im Bereich des Radius $R_4$ die benachbarte Ecke des durchstanzten stempelseitigen Fügeteils 28 entsprechend verformen und hierbei Material des stempelseitigen Fügeteils 28 teilweise auch radial nach außen verdrängen. Hierfür ist eine sehr hohe Kraft erforderlich, was wiederum die Größe der erforderlichen Setzkraft erhöht. Ist der Radius $R_4$ zu klein, so kann die hierdurch hervorgerufene Kerbwirkung zu einem Bruch des Nietkopfes 4 führen.

Der beschriebene, als Senkkopf ausgebildete Nietkopf, insbesondere die oben definierte Unterkopfgeometrie, ist ganz allgemein zum Nieten von Fügeteilen aus allen metallischen Werkstoffen und gegebenenfalls auch anderen Werkstoffen geeignet. Beim Fügen von Kunststoffen, insbesondere faserverstärkten Kunststoffen, können auch flach aufliegende Nietköpfe, so genannte Flachköpfe, mit kleinen Übergangsradien zum Nietkopf zweckmäßig sein. In diesen Fällen wird im Allgemeinen der Kopfdurchmesser $d_K$ größer gewählt als bei den Senkkopfnieten, um die spezifische Flächenbelastung zwischen der Nietkopfunterseite und der Oberseite des stempelseitigen Fügeteils zu verringern. Die Größe des Nietkopfdurchmessers liegt dann außerhalb des oben definierten Bereiches.

Gestaltung des Nietschaftes mit Schaftbohrung

Im Stand der Technik liegt der Schaftaußendurchmesser $d_N$ von Halbhohlstanznieten üblicherweise zwischen 3 und 8 mm, und die Wanddicke des Nietschaftes liegt üblicherweise zwischen 0,5 und 2,0 mm. Die Gesamtlänge des Stanznietes ist selten größer als 10 mm. In der Kraftfahrzeugtechnik eingesetzte Halbhohlstanzniete zum Verbinden von Karosserieteilen haben häufig einen Schaftaußendurchmesser $d_N$ von 5,3 mm oder 3,2 mm.

Auch für Stanzniete gemäß der vorliegenden Erfindung kann der Schaftaußendurchmesser $d_N$ in diesen Bereichen gewählt werden. Vorzugsweise liegt der Schaftaußendurchmesser $d_N$ im Bereich von 5,0 bis 6,0 mm. Wie noch genauer erläutert wird, kann jedoch bei Stanznieten gemäß der vorliegenden Erfindung der Schaftaußendurchmesser $d_N$ grundsätzlich etwas größer als im Stand der Technik gewählt werden kann, da die erfindungsgemäß ausgebildeten Stanzniete geringere Setzkräfte erfordern.

Der Schaftinnendurchmesser $d_i$ beträgt vorzugsweise $(0,5 \text{ bis } 0,8)\, d_N$. Für die Größen $R_5$, $R_6$, $\gamma$, $t_B$ und $D_K$ gelten vorzugsweise die folgenden Wertebereiche:

$$R_5 = 0,7 \pm 0,5 \text{ mm, insbesondere } R_5 = 0,8 \pm 0,3 \text{ mm}$$

$$R_6 = 0,9 \pm 0,5 \text{ mm, insbesondere } R_6 = 0,8 \pm 0,3 \text{ mm}$$

$$\gamma = 110° \text{ bis } 140°, \text{ insbesondere } \gamma = 110° \text{ bis } 130°$$

$$t_B \geq 0,2\, d_N, \text{ insbesondere } t_B \geq 0,3\, d_N$$

$$D_K \geq 0,15\, d_N.$$

Die angegebenen Wertebereiche für die die Schaftgeometrie bestimmenden Größen stellen sicher, dass dem Nietschaft 6 in jedem Anwendungsfall eine ausreichende Druckstabilität (kein unzulässiges Stauchen beim Fügevorgang), eine ausreichende Knick- und Beulfestigkeit (kein Knicken und/oder Beulen des Nietschaftes beim Fügevorgang) und eine ausreichende Biege- und Stauchfestigkeit (gezielte Verformung beim Fügevorgang) verliehen werden kann.

Die dargestellte Geometrie und insbesondere der Winkel $\gamma$ der Schaftbohrung wurden so gewählt, um die Fertigung der Schaftbohrung zu erleichtern. Es sei jedoch darauf hingewiesen, dass die Geometrie der Schaftbohrung auch anders gewählt werden kann. So kann beispielsweise der Boden der Schaftbohrung domförmig, das heißt in Form eines Kreisbogens mit einem Übergang zur Schaftinnenfläche 16 über die Radien $R_5$, ausgebildet werden. Auch andere Bohrungsgeometrien sind möglich.

Herstellung des Stanznietes

Wie bereits erwähnt, ermöglichen die Stanzniete gemäß der vorliegenden Erfindung deutlich verringerte Setzkräfte im Vergleich zum Stand der Technik. Untersuchungen haben ergeben, dass die zum Herstellen der Stanznietverbindung erforderlichen Setzkräfte größenordnungsmäßig um 20 % niedriger sind. Dies wiederum erlaubt es, den Schaftaußendurchmesser $d_N$ und damit auch den Schaftinnendurchmesser $d_i$ größer als im Stand der Technik zu machen, ohne die Druckstabilität, Knick- und Beulfestigkeit sowie die Biege- und Stauchfestigkeit des Stanznietes zu gefährden.

Eine Vergrößerung des Schaftaußendurchmessers $d_N$ des Stanznietes ermöglicht eine technologisch erleichterte und wirtschaftlichere Herstellung des Stanznietes:

Bei der Herstellung von Stanznieten durch Kaltumformung wird die Schaftbohrung mittels eines so genannten Pins geformt. Je kleiner der Querschnitt der Schaftbohrung 8 und damit des Pins ist, umso schwieriger ist die Herstellung des Stanznietes.

Hierbei ist zu berücksichtigen, dass die Kosten für die Nietherstellung wesentlich von den Kosten für die Herstellwerkzeuge abhängen, wobei die Lebensdauer der Herstellwerkzeuge eine entscheidende Rolle spielt. Eine Vergrößerung des Querschnitts der Schaftbohrung und damit des Pins führt zu einer signifikanten Erleichterung der Herstellung und darüber hinaus - wegen der verbesserten Führung des Pins - zu einer Verbesserung der Herstellgenauigkeit der Schaftbohrung. Hierdurch wird die Lebensdauer der Herstellwerkzeuge überproportional verlängert, so dass die Kosten für die Nietherstellung entsprechend verringert werden.

Bei diesen Überlegungen ist ferner zu berücksichtigen, dass eine kleinere Änderung des Schaftaußendurchmessers $d_N$ eine größere Änderung des Schaftinnendurchmessers $d_i$ zur Folge haben kann, ohne die Stabilität des Stanznietes zu beeinträchtigen. Eine Änderung des Schaftaußendurchmessers $d_N$ um 0,3 mm gestattet beispielsweise eine Änderung des Schaftinnendurchmessers $d_i$ um 0,4 mm, ohne dass die Druckstabilität des Nietschaftes beeinträchtigt wird. Eine Änderung eines Schaftinnendurchmessers $d_i$ = 2,9 mm um 0,3 mm führt zu einer Querschnittsvergrößerung des Pins um 33 %, und eine Änderung um 0,4 mm zu einer Querschnittsvergrößerung des Pins um 41 %.

Aus diesen Zahlenbeispielen wird deutlich, dass die erfindungsgemäß ausgebildeten Stanzniete wesentlich wirtschaftlicher hergestellt werden können als Stanzniete des Standes der Technik.

Gestaltung der Matrize

Einen erheblichen Einfluss auf den Fügevorgang und die Ausbildung der Stanznietverbindung hat die bei der Herstellung verwendete Matrize 30, insbesondere das Volumen bzw. der Durchmesser $D_M$ der zylindrischen Umfangsfläche 38 des Hohlraums 34 der Matrize 30, siehe Figuren 2 bis 6.

Für den Durchmesser $D_M$ gilt vorzugsweise:

$D_M = d_N + (0{,}6 \text{ bis } 1{,}5)\ 2t_M$, insbesondere $D_M = d_N + (0{,}7 \text{ bis } 1{,}2)\ 2t_M$ für Fügeteile aus Werkstoffen guter Verformungsfähigkeit, insbesondere Knetlegierungen. $t_M$ ist hierbei die Dicke des matrizenseitigen Fügeteils 26. Damit nimmt der Durchmesser $D_M$ der Matrize 30 mit der Dicke des matrizenseitigen Fügeteils 26 zu. Zweckmäßigerweise sollte auch die Tiefe $T_M$ des Hohlraums 34 der Matrize 30 mit der Dicke des matrizenseitigen Fügeteils 26 größer gewählt werden. Vorzugsweise gilt:

$$T_M = (1{,}0 \text{ bis } 2{,}5)\ t_M, \text{ insbesondere } T_M = (1{,}1 \text{ bis } 2{,}2)\ t_M.$$

Durch die angegebenen Wertebereiche ergeben sich Durchmesser $D_M$ der Umfangsfläche 38 der Matrizen, die klein sind im Vergleich zum Stand der Technik. Diese Verkleinerung des Hohlraumes der Matrize, insbesondere des Durchmessers $D_M$, verringert den so genannten "Schneidspalt", d. h. den Spalt zwischen dem Schaftaußendurchmesser $d_N$ und dem Matrizeninnendurchmesser, d. h. dem Durchmesser $D_M$. Dies wiederum begünstigt die im Zusammenhang mit der Gestaltung des Nietfußes erläuterten Vorgänge beim Fügevorgang. Insbesondere werden hierdurch das Durchstanzen des stempelseitigen Fügeteils 28 in einem "Schneidvorgang", das Verformen des matrizenseitigen Fügeteils 26 sowie die entsprechenden Bewegungen und Verformungen des Nietschaftes 6 begünstigt.

Für Fügeteile aus Gusswerkstoffen sowie aus anderen Werkstoffen geringer Umformfähigkeit bzw. geringer Bruchdehnung wie z. B. Magnesium gilt vorzugsweise:

$$D_M \leq 2{,}2\ d_N$$

$$T_M \leq 0{,}15\ D_M.$$

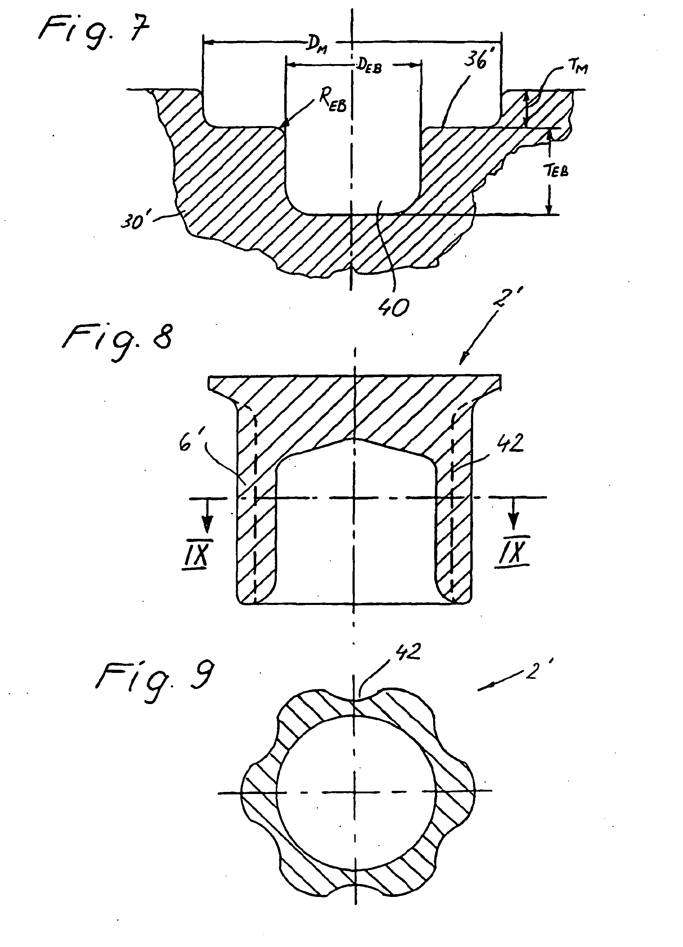

Bei dem Ausführungsbeispiel der Fig. 3 bis Fig. 6 ist die Bodenfläche 36 der Matrize 30 in herkömmlicher Weise mit einem nach oben vorstehenden Dorn versehen. Fig. 7 zeigt eine erfindungsgemäße Ausführungsform einer Matrize 30', bei der die Bodenfläche 36' mit einer zentralen Vertiefung 40 versehen ist. Im dargestellten Ausführungsbeispiel ist die Vertiefung 40 zylindrisch ausgebildet und hat einen Durchmesser $D_{EB} \leq 0{,}5\ D_M$ und eine Tiefe $T_{EB} \geq 0{,}3\ d_N$. Für den Radius $R_{EB}$ gilt:

$$R_{EB} \geq 0{,}3 \text{ mm, insbesondere } 0{,}4 \text{ bis } 1{,}0 \text{ mm.}$$

Die Vertiefung 40 sorgt für eine Druckentlastung beim Fügevorgang, wodurch überhöhte Radialspannungen in der Stanznietverbindung vermieden werden und die Gefahr einer Rissbildung reduziert wird. Zweckmäßigerweise können sich deren Abmessungen - Durchmesser und Tiefe - auch am Durchmesser der Nietbohrung bzw. der Dicke des matrizenseitigen Fügeteils orientieren und betragen dann

$$D_{EB} \geq d_i$$

$$T_{EB} \geq 0{,}1\ t_M, \text{ z. B. } \geq 0{,}1 \text{ mm.}$$

Die Fig. 8 und 9 zeigen eine abgewandelte Ausführungsform eines Stanznietes 2'. Während bei dem Ausführungsbeispiel der Fig. 1 bis Fig. 6 die Schaftaußenfläche 14 zylindrisch ausgebildet ist, ist die Schaftaußenfläche des modifizierten Stanznietes 2' mit einer axialen Riffelung 42 versehen. Die axiale Riffelung 42 bildet eine Verdrehsicherung beim Fügevorgang, was insbesondere dann von Vorteil ist, wenn der Stanzniet als Funktionselement (nicht gezeigt) mit einem bolzen- oder mutterförmigen Ansatz am Nietkopf ausgebildet ist. Die axial verlaufende Riffelung 42 sorgt außerdem für eine gute Führung des Stanznietes 2', ohne dass hierdurch die erforderliche Fügekraft erhöht wird.

**Patentansprüche**

1. Stanzniet mit einem Nietkopf (4) und einem Nietschaft (6) mit einer zentralen Schaftbohrung (8), die eine gemeinsame zentrale Achse X haben,
wobei
der Nietkopf (4) eine im Wesentlichen zylindrische Kopfaußenfläche (12) eines vorgegebenen Kopfdurchmessers $d_K$ hat,
der Nietschaft (6) eine Schaftaußenfläche (14) eines vorgegebenen Schaftaußendurchmessers $d_N$ und eine die zentrale Schaftbohrung (8) begrenzende Schaftinnenfläche (16) eines vorgegebenen Schaftinnendurchmessers $d_i$ hat,
die Kopfaußenfläche (12) und die Schaftaußenfläche (14) durch eine konische oder leicht gekrümmte Unterkopffase (18; 18') und einen Unterkopfradius $R_4$ verbunden sind, welcher tangential sowohl in die Unterkopffase (18; 18') wie auch in die Schaftaußenfläche (14) übergeht,
**dadurch gekennzeichnet, dass**
die Schaftaußenfläche (14) und die Schaftinnenfläche (16) am Nietfußende über einen radial äußeren ersten Radius $R_1$ und einen radial inneren zweiten Radius $R_2$ verbunden sind, die tangential ineinander übergehen, wobei die gemeinsame Tangente Tan mit einer Radialebene des Stanznietes einen Winkel $\alpha$ einschließt,
wobei der erste Radius $R_1$ tangential in die Schaftaußenfläche (14) übergeht und der zweite Radius $R_2$ tangential in die Schaftinnenfläche (16) übergeht, und
wobei für den erste Radius $R_1$, den zweiten Radius $R_2$ und den Winkel $\alpha$ die folgenden Wertebereiche gelten:

$$R_1 = 0,3 \pm 0,2 \text{ mm}$$

$$R_2 = (0,7 \text{ bis } 1,2)(d_N - d_i)/2$$

$$\alpha = 10° \pm 20°.$$

2. Stanzniet mit einem Nietkopf (4) und einem Nietschaft (6) mit einer zentralen Schaftbohrung (8), die eine gemeinsame zentrale Achse X haben,
wobei
der Nietkopf (4) eine im Wesentlichen zylindrische Kopfaußenfläche (12) eines vorgegebenen Kopfdurchmessers $d_K$ hat,
der Nietschaft (6) eine im Wesentlichen zylindrische Schaftaußenfläche (14) eines vorgegebenen Schaftaußendurchmessers $d_N$ und eine die zentrale Schaftbohrung (8) begrenzende, im Wesentlichen zylindrische Schaftinnenfläche (16) eines vorgegebenen Schaftinnendurchmessers $d_i$ hat,
die Kopfaußenfläche (12) und die Schaftaußenfläche (14) durch eine konische oder leicht gekrümmte Unterkopffase (18; 18') und einen Unterkopfradius $R_4$ verbunden sind, welcher tangential sowohl in die Unterkopffase (18; 18') wie auch in die Schaftaußenfläche (14) übergeht,
**dadurch gekennzeichnet, dass**
die Schaftaußenfläche (14) und die Schaftinnenfläche (16) am Nietfußende über einen radial äußeren ersten Radius $R_1$ und einen radial inneren zweiten Radius $R_2$ verbunden sind, die tangential ineinander übergehen, wobei die gemeinsame Tangente Tan mit einer Radialebene des Stanznietes einen Winkel $\alpha$ einschließt,
wobei der erste Radius $R_1$ tangential in die Schaftaußenfläche (14) übergeht und der zweite Radius $R_2$ mit der Schaftinnenfläche (16) durch einen dritten Radius $R_3$ verbunden ist, der tangential sowohl in den zweiten Radius $R_2$ wie auch in die Schaftinnenfläche (16) übergeht, und

wobei für den erste Radius $R_1$, den zweiten Radius $R_2$, den dritten Radius $R_3$ und den Winkel $\alpha$ die folgenden Wertebereiche gelten:

$$R_1 = 0,3 \pm 0,2 \text{ mm}$$

$$R_2 = (0,7 \text{ bis } 1,2)(d_N - d_i)/2$$

$$R_3 = 0,8 \pm 0,4 \text{ mm}$$

$$\alpha = 5° \pm 10°.$$

3.  Stanzniet nach Anspruch 1 oder 2, **dadurch gekennzeichnet, dass** für den zweiten Radius $R_2$ gilt:

$$R_2 = (0,8 \text{ bis } 1,0)(d_N - d_i)/2.$$

4.  Stanzniet nach einem der Ansprüche 1 bis 3, **dadurch gekennzeichnet, dass** die konische Unterkopffase (18) mit einer Radialebene des Stanznietes einen Winkel $\beta = 25° \pm 10°$, insbesondere $25° \pm 7°$ einschließt.

5.  Stanzniet nach einem der Ansprüche 1 bis 3, **dadurch gekennzeichnet, dass** die leicht gekrümmte Unterkopffase (18') einen Radius $R_7 \geq 2,0$ mm aufweist.

6.  Stanzniet nach einem der vorhergehenden Ansprüche, **dadurch gekennzeichnet, dass** für den Unterkopfradius $R_4$ gilt:

$$R_4 = 0,6 \pm 0,4 \text{ mm, insbesondere } R_4 = 0,5 \pm 0,2 \text{ mm.}$$

7.  Stanzniet nach einem der vorhergehenden Ansprüche, **dadurch gekennzeichnet, dass** für den Schaftinnendurchmesser $d_i$ gilt:

$$d_i = (0,5 \text{ bis } 0,8) d_N.$$

8.  Stanzniet nach einem der vorhergehenden Ansprüche, **dadurch gekennzeichnet, dass** für den Kopfdurchmesser $d_K$ des Nietkopfes (4) gilt:

$$d_K = (1,3 \text{ bis } 1,8) d_N, \text{ insbesondere } d_K = (1,4 \text{ bis } 1,65) d_N.$$

9.  Stanzniet nach einem der vorhergehenden Ansprüche, **dadurch gekennzeichnet, dass** für die axiale Länge $H_K$ der Kopfaußenfläche (12) gilt:

$$H_K = (0,025 \text{ bis } 0,2) d_N, \text{ insbesondere } H_K = (0,025 \text{ bis } 0,12) d_N.$$

10. Stanzniet nach einem der vorhergehenden Ansprüche, bei dem das Nietkopfende der Schaftbohrung (8) geschlossen ausgebildet ist, **dadurch gekennzeichnet, dass** das geschlossene Ende der Schaftbohrung (8) eine konische Bodenfläche (24) aufweist, die über einen äußeren Schaftbohrungsradius $R_5$ in die Schaftinnenfläche (16) übergeht und im Bereich der zentralen Achse X in einem inneren Schaftbohrungsradius $R_6$ endet.

**11.** Stanzniet nach Anspruch 10, **dadurch gekennzeichnet, dass** der Konuswinkel $\gamma$ der konischen Bodenfläche (24) 110° bis 140°, insbesondere 110° bis 130° beträgt.

**12.** Stanzniet nach Anspruch 10 oder 11, **dadurch gekennzeichnet, dass** für den äußeren Schaftbohrungsradius $R_5$ gilt:

$$R_5 = 0{,}7 \pm 0{,}5 \text{ mm, insbesondere } R_5 = 0{,}8 \pm 0{,}3 \text{ mm.}$$

**13.** Stanzniet nach einem der Ansprüche 10 bis 12, **dadurch gekennzeichnet, dass** für den inneren Schaftbohrungsradius $R_6$ gilt:

$$R_6 = 0{,}9 \pm 0{,}5 \text{ mm, insbesondere } R_6 = 0{,}8 \pm 0{,}3 \text{ mm.}$$

**14.** Stanzniet nach einem der Ansprüche 10 bis 13, **dadurch gekennzeichnet, dass** für die Tiefe $t_B$ der Schaftbohrung (8) vom Nietfußende bis zu der Stelle, an der sich gedachte Verlängerungen der konischen Bodenfläche (24) und der Schaftinnenfläche (16) schneiden, gilt:

$$t_B \geq 0{,}2 \, d_N, \text{ insbesondere } t_B \geq 0{,}3 \, d_N.$$

**15.** Stanzniet nach einem der Ansprüche 10 bis 14, **dadurch gekennzeichnet, dass** für die Dicke $D_K$ des Nietkopfes (4) auf der zentralen Achse X gilt:

$$D_K \geq 0{,}15 \, d_N.$$

**16.** Stanzniet nach einem der Ansprüche 1 bis 9, **dadurch gekennzeichnet, dass** die Schaftbohrung am Nietkopfende offen ausgebildet ist.

**17.** Stanzniet nach einem der vorhergehenden Ansprüche, **dadurch gekennzeichnet, dass** er als Funktionselement, insbesondere als Stanzbolzen oder Stanzmutter, ausgebildet ist.

**18.** Stanzniet nach einem der vorhergehenden Ansprüche, **dadurch gekennzeichnet, dass** der Nietschaft (6; 6') eine im Wesentlichen zylindrische Schaftaußenfläche (14) oder eine mit einer axialen Riffelung (42) versehene Schaftaußenfläche hat.

**19.** Matrize zum Herstellen einer Stanznietverbindung mittels eines Stanznietes, insbesondere nach einem der vorhergehenden Ansprüche, mit einem Matrizenhohlraum (34), der von einem Matrizenboden (36) und einer zylindrischen Umfangsfläche (38) begrenzt wird,
**dadurch gekennzeichnet, dass** für den Matrizendurchmesser $D_M$ und die Tiefe $T_M$ des Matrizenhohlraumes (34) gilt:

$$D_M = d_N + (0{,}6 \text{ bis } 1{,}5) \, 2t_M, \text{ insbesondere } d_N + (0{,}7 \text{ bis } 1{,}2) \, 2t_M$$

$$T_M = (1{,}0 \text{ bis } 2{,}5) \, t_M, \text{ insbesondere } T_M = (1{,}1 \text{ bis } 2{,}2) \, t_M$$

für Fügeteile aus Werkstoffen guter Verformungsfähigkeit, insbesondere für Knetlegierungen, worin $d_N$ der Schaftaußendurchmesser des Nietschaftes (6) des Stanznietes (2) und $t_M$ die Dicke des matrizenseitigen Fügeteiles (26) ist, und

$$D_M \leq 2{,}2\, d_N$$

$$T_M \leq 0{,}15\, D_M$$

für Fügeteile aus Gusswerkstoffen und anderen Werkstoffen geringer Umformungsfähigkeit.

**20.** Matrize zum Herstellen einer Stanznietverbindung mittels eines Stanznietes, insbesondere nach einem der vorhergehenden Ansprüche, mit einem Matrizenhohlraum (34), der von einem Matrizenboden (36) und einer zylindrischen Umfangsfläche (38) begrenzt wird, **dadurch gekennzeichnet, dass** die Matrize (30') am Matrizenboden eine zentrale Vertiefung (40) aufweist, die als Druckentlastung beim Fügevorgang sorgt.

**21.** Matrize nach Anspruch 20, **dadurch gekennzeichnet, dass** die zentrale Vertiefung (40) einen Durchmesser von $D_{EB} \leq 0{,}5\, D_M$ und eine Tiefe $T_{EB} \geq 0{,}2\, d_N$, insbesondere $T_{EB} \geq 0{,}3\, d_N$ hat.

**22.** Matrize nach Anspruch 20, **dadurch gekennzeichnet, dass** die zentrale Vertiefung (40) einen Durchmesser von $D_{EB} \geq d_j$ und eine Tiefe $T_{EB} \geq 0{,}1\, t_M$ hat.

**23.** Verfahren zum Herstellen einer Stanznietverbindung zwischen zwei Fügeteilen (26; 28) mittels eines Stanznietes, insbesondere eines Stanznietes nach einem der Ansprüche 1 bis 18, **dadurch gekennzeichnet, dass** eine Matrize gemäß Anspruch 19 eingesetzt wird.

**24.** Verfahren zum Herstellen einer Stanznietverbindung zwischen zwei Fügeteilen (26; 28) mittels eines Stanznietes, insbesondere eines Stanznietes nach einem der Ansprüche 1 bis 18, **dadurch gekennzeichnet, dass** eine Matrize gemäß einem der Ansprüche 20 bis 22 eingesetzt wird.

**25.** Verwendung einer Matrize nach einem der Ansprüche 19 bis 22 zum Herstellen einer Stanznietverbindung zwischen zwei Fügeteilen (26; 28).

**Claims**

**1.** A punch rivet with a rivet head (4) and a rivet shaft (6) with a central shaft bore (8) that have a common central axis X, wherein
the rivet head (4) has an essentially cylindrical head outside surface (12) with a predetermined head diameter $d_K$, the rivet shaft (6) has a shaft outside surface (14) with a predetermined shaft outside diameter $d_N$ and a shaft inside surface (16) with a predetermined shaft inside diameter $d_i$ that defines the central shaft bore (8), and
the head outside surface (12) and the shaft outside surface (14) are connected by a conical or slightly curved lower head bevel (18; 18') and a lower head radius $R_4$ that tangentially transforms into the lower head bevel (18; 18'), as well as into the shaft outside surface (14),
**characterized in that**
the shaft outside surface (14) and the shaft inside surface (16) are connected on the rivet bottom end by a radially outer first radius $R_1$ and
a radially inner second radius $R_2$ that tangentially transform into one another, wherein the common tangent Tan includes an angle a with a radial plane of the punch rivet,
wherein the first radius $R_1$ tangentially transforms into the shaft outside surface (14) and
the second radius $R_2$ tangentially transforms into the shaft inside surface (16), and
wherein the following ranges of values apply to the first radius $R_1$, the second radius $R_2$ and the angle $\alpha$:

$$R_1 = 0.3 \pm 0.2 \text{ mm}$$

$$R_2 = (0.7 \text{ to } 1.2)(d_N - d_i)/2$$

$$\alpha = 10° \pm 20°.$$

2. A punch rivet with a rivet head (4) and a rivet shaft (6) with a central shaft bore (8) that have a common central axis X, wherein
the rivet head (4) has an essentially cylindrical head outside surface (12) with a predetermined head diameter $d_K$,
the rivet shaft (6) has an essentially cylindrical shaft outside surface (14) with a predetermined shaft outside diameter $d_N$ and an essentially cylindrical shaft inside surface (16) with a predetermined shaft inside diameter $d_i$ that defines the central shaft bore (8), and
the head outside surface (12) and the shaft outside surface (14) are connected by a conical or slightly curved lower head bevel (18; 18') and a lower head radius $R_4$ that tangentially transforms into the lower head bevel (18; 18'), as well as into the shaft outside surface (14),
**characterized in that**
the shaft outside surface (14) and the shaft inside surface (16) are connected on the rivet bottom end by a radially outer first radius $R_1$ and
a radially inner second radius $R_2$ that tangentially transform into one another, wherein the common tangent Tan includes an angle $\alpha$ with a radial plane of the punch rivet,
wherein the first radius $R_1$ tangentially transforms into the shaft outside surface (14) and the second radius $R_2$ is connected to the shaft inside surface (16) by a third radius $R_3$ that tangentially transforms into the second radius $R_2$, as well as into the shaft inside surface (16), and
wherein the following ranges of values apply to the first radius $R_1$, the second radius $R_2$, the third radius $R_3$ and the angle $\alpha$:

$$R_1 = 0.3 \pm 0.2 \text{ mm}$$

$$R_2 = (0.7 \text{ to } 1.2)(d_N - d_i)/2$$

$$R_3 = 0.8 \pm 0.4 \text{ mm}$$

$$\alpha = 5° \pm 10°.$$

3. The punch rivet according to claim 1 or 2,
**characterized in that** the following applies to the second radius $R_2$:

$$R_2 = (0.8 \text{ to } 1.0)(d_N - d_i)/2.$$

4. The punch rivet according to one of claims 1 to 3,
**characterized in that** the conical lower head bevel (18) includes an angle $\beta = 25° \pm 10°$, particularly $25° \pm 7°$, with a radial plane of the punch rivet.

5. The punch rivet according to one of claims 1 to 3,
**characterized in that** the slightly curved lower head bevel (18') has a radius $R_7 \geq 2.0$ mm.

6. The punch rivet according to one of the preceding claims, **characterized in that** the following applies to the lower head radius $R_4$:

$$R_4 = 0.6 \pm 0.4 \text{ mm, particularly } R_4 = 0.5 \pm 0.2 \text{ mm.}$$

7. The punch rivet according to one of the preceding claims, **characterized in that** the following applies to the shaft inside diameter $d_i$:

$$d_i = (0.5 \text{ to } 0.8)d_N.$$

8. The punch rivet according to one of the preceding claims, **characterized in that** the following applies to the head diameter $d_K$ of the rivet head (4) :

$$d_K = (1.3 \text{ to } 1.8)d_N, \text{ particularly } d_K = (1.4 \text{ to } 1.65)d_N.$$

9. The punch rivet according to one of the preceding claims, **characterized in that** the following applies to the axial length $H_K$ of the head outside surface (12):

$$H_K = (0.025 \text{ to } 0.2)d_N, \text{ particularly } H_K = (0.025 \text{ to } 0.12)d_N.$$

to 0.12)$d_N$.

10. A punch rivet according to one of the preceding claims, in which the rivet head end of the shaft bore (8) is closed, **characterized in that** the closed end of the shaft bore (8) has a conical bottom surface (24) that transforms into the shaft inside surface (16) via an outer shaft bore radius $R_5$ and ends in an inner shaft bore radius $R_6$ in the region of the central axis X.

11. The punch rivet according to claim 10,
    **characterized in that** the cone angle $\gamma$ of the conical bottom surface (24) lies between 110° and 140°, particularly between 110° and 130°.

12. The punch rivet according to claim 10 or 11,
    **characterized in that** the following applies to the outer shaft bore radius $R_5$:

$$R_5 = 0.7 \pm 0.5 \text{ mm, particularly } R_5 = 0.8 \pm 0.3 \text{ mm.}$$

13. The punch rivet according to one of claims 10 to 12, **characterized in that** the following applies to the inner shaft bore radius $R_6$:

$$R_6 = 0.9 \pm 0.5 \text{ mm, particularly } R_6 = 0.8 \pm 0.3 \text{ mm.}$$

**14.** The punch rivet according to one of claims 10 to 13, **characterized in that** the following applies to the depth $t_B$ of the shaft bore (8) from the rivet bottom end up to the location, at which imaginary extensions of the conical bottom surface (24) and the shaft inside surface (16) intersect:

$$t_B \geq 0.2\ d_N, \text{ particularly } t_B \geq 0.3\ d_N.$$

**15.** The punch rivet according to one of claims 10 to 14, **characterized in that** the following applies to the thickness $D_K$ of the rivet head (4) on the central axis X:

$$D_K \geq 0.15\ d_N.$$

**16.** The punch rivet according to one of claims 1 to 9, **characterized in that** the shaft bore is open on the rivet top end.

**17.** The punch rivet according to one of the preceding claims, **characterized in that** it is realized in the form of a functional element, particularly in the form of a punch bolt or punch nut.

**18.** The punch rivet according to one of the preceding claims, **characterized in that** the rivet shaft (6; 6') has an essentially cylindrical shaft outside surface (14) or a shaft outside surface that is provided with an axial fluting (42).

**19.** A die for producing a punch rivet connection by means of a punch rivet, particularly according to one of the preceding claims, with a die cavity (34) that is defined by a die bottom (36) and a cylindrical circumferential surface (38), **characterized in that** the following applies to the die diameter $D_M$ and to the depth $T_M$ of the die cavity (34):

$$D_M = d_N + (0.6 \text{ to } 1.5)2t_M, \text{ particularly } d_N + (0.7 \text{ to } 1.2)2t_M$$

$$T_M = (1.0 \text{ to } 2.5)t_M, \text{ particularly } T_M = (1.1 \text{ to } 2.2)t_M$$

for parts being joined that consist of materials with adequate ductility, particularly for wrought alloys, wherein $d_N$ is the shaft outside diameter of the rivet shaft (6) of the punch rivet (2) and $t_M$ is the thickness of the part being joined (26) on the die side and

$$D_M \leq 2.2\ d_N$$

$$T_M \leq 0.15\ D_M$$

for parts being joined that consist of cast materials and other materials with low deformability.

**20.** A die for producing a punch rivet connection by means of a punch rivet, particularly according to one of the preceding claims, with a die cavity (34) that is defined by a die bottom (36) and a cylindrical circumferential surface (38), **characterized in that** the die (30') features a central depression (40) on the die bottom that serves as a pressure relief during the joining process.

**21.** The die according to claim 20, **characterized in that** the central depression (40) has a diameter $D_{EB} \leq 0.5\ D_M$ and a depth $T_{EB} \geq 0.2\ d_N$, particularly $T_{EB} \geq 0.3\ d_N$.

**22.** The die according to claim 20, **characterized in that** the central depression (40) has a diameter $D_{EB} \geq d_i$ and a depth $T_{EB} \geq 0.1\ t_M$.

**23.** A method for producing a punch rivet connection between two parts being joined (26; 28) by means of a punch rivet, particularly a punch rivet according to one of claims 1 to 18, **characterized in that** a die according to claim 19 is used.

**24.** A method for producing a punch rivet connection between two parts being joined (26; 28) by means of a punch rivet, particularly a punch rivet according to one of claims 1 to 18, **characterized in that** a die according to one of claims 20 to 22 is used.

**25.** The utilization of a die according to one of claims 19 to 22 for producing a punch rivet connection between two parts being joined (26; 28).

**Revendications**

**1.** Rivet auto-poinçonneur avec une tête de rivet (4) et une tige de rivet (6) avec un perçage de tige central (8), possédant un axe central X commun,
dans lequel
la tête de rivet (4) possède une surface extérieure de tête (12) essentiellement cylindrique, avec un diamètre de tête prédéfini $d_K$,
la tige de rivet (6) possède une surface extérieure de tige (14) d'un diamètre extérieur de tige prédéfini $d_N$, et une surface intérieure de tige (16) délimitant le perçage de tige central (8), avec un diamètre intérieur de tige prédéfini $d_i$,
la surface extérieure de tête (12) et la surface extérieure de tige (14) sont reliées par un chanfrein de sous-tête (18; 18') conique ou légèrement courbé et par un rayon de sous-tête $R_4$, lequel se prolonge tangentiellement aussi bien dans le chanfrein de sous-tête (18; 18') que dans la surface extérieure de tige (14), **caractérisé en ce que**
la surface extérieure de tige (14) et la surface intérieure de tige (16) sont reliées au niveau de l'extrémité de pied de rivet, par un premier rayon radialement extérieur $R_1$ et un deuxième rayon radialement intérieur $R_2$, qui se rejoignent tangentiellement, la tangente commune Tan formant un angle $\alpha$ avec un plan radial du rivet auto-poinçonneur,
dans lequel le premier rayon $R_1$ se prolonge tangentiellement dans la surface extérieure de tige (14) et le deuxième rayon $R_2$ se prolonge dans la surface intérieure de tige (16), et
dans lequel, pour le premier rayon $R_1$, le deuxième rayon $R_2$ et l'angle $\alpha$, les plages de valeurs suivantes sont valables:

$$R_1 = 0,3 \pm 0,2\ mm$$

$$R_2 = (0,7\ \text{à}\ 1,2)(d_N - d_i)/2$$

$$\alpha = 10° \pm 20°.$$

**2.** Rivet auto-poinçonneur avec une tête de rivet (4) et une tige de rivet (6) avec un perçage de tige central (8), possédant un axe central X commun,
dans lequel
la tête de rivet (4) possède une surface extérieure de tête (12) essentiellement cylindrique, avec un diamètre prédéfini $d_K$,
la tige de rivet (6) possède une surface extérieure de tige (14) essentiellement cylindrique, avec un diamètre extérieur de tige prédéfini $d_N$, et une surface intérieure de tige (16) délimitant le perçage de tige central (8), avec un diamètre intérieur de tige prédéfini $d_i$,
la surface extérieure de tête (12) et la surface extérieure de tige (14) sont reliées par un chanfrein de sous-tête (18; 18') conique ou légèrement courbé et par un rayon de sous-tête $R_4$, lequel se prolonge tangentiellement aussi bien dans le chanfrein de sous-tête (18; 18') que dans la surface extérieure de tige (14), **caractérisé en ce que**
la surface extérieure de tige (14) et la surface intérieure de tige (16) sont reliées au niveau de l'extrémité de pied de rivet, par un premier rayon radialement extérieur $R_1$ et un deuxième rayon radialement intérieur $R_2$, qui se

rejoignent tangentiellement, la tangente commune Tan formant un angle $\alpha$ avec un plan radial du rivet auto-poinçonneur,

dans lequel le premier rayon $R_1$ se prolonge tangentiellement dans la surface extérieure de tige (14) et le deuxième rayon $R_2$ est relié à la surface intérieure de tige (16) par un troisième rayon $R_3$, lequel se prolonge tangentiellement aussi bien dans le deuxième rayon $R_2$ que dans la surface intérieure de tige (16), et

dans lequel, pour le premier rayon $R_1$, le deuxième rayon $R_2$, le troisième rayon $R_3$ et l'angle $\alpha$, les plages de valeurs suivantes sont valables:

$$R_1 = 0,3 \pm 0,2 \text{ mm}$$

$$R_2 = (0,7 \text{ à } 1,2)(d_N - d_i)/2$$

$$R_3 = 0,8 \pm 0,4 \text{ mm}$$

$$\alpha = 5° \pm 10°.$$

3. Rivet auto-poinçonneur selon l'une des revendications 1 ou 2, **caractérisé en ce que** pour le deuxième rayon $R_2$ s'applique:

$$R_2 = (0,8 \text{ à } 1,0)(d_N - d_i)/2.$$

4. Rivet auto-poinçonneur selon l'une des revendications 1 à 3, **caractérisé en ce que** le chanfrein de sous-tête conique (18) forme un angle $\beta = 25° \pm 10°$, en particulier $25° \pm 7°$, avec un plan radial du rivet auto-poinçonneur.

5. Rivet auto-poinçonneur selon l'une des revendications 1 à 3, **caractérisé en ce que** le chanfrein de sous-tête (18') légèrement courbé présente un rayon $R_7 \geq 2,0$ mm.

6. Rivet auto-poinçonneur selon l'une des revendications précédentes, **caractérisé en ce que** pour le rayon de sous-tête $R_4$ s'applique:

$$R_4 = 0,6 \pm 0,4 \text{ mm, en particulier } R_4 = 0,5 \pm 0,2 \text{ mm.}$$

7. Rivet auto-poinçonneur selon l'une des revendications précédentes, **caractérisé en ce que** pour le diamètre intérieur de tige $d_i$ s'applique:

$$d_i = (0,5 \text{ à } 0,8) \, d_N.$$

8. Rivet auto-poinçonneur selon l'une des revendications précédentes, **caractérisé en ce que** pour le diamètre de tête $d_K$ de la tête de rivet (4) s'applique:

$$d_K = (1,3 \text{ à } 1,8) \, d_N, \text{ en particulier } d_K = (1,4 \text{ à } 1,65) \, d_N.$$

9. Rivet auto-poinçonneur selon l'une des revendications précédentes, **caractérisé en ce que** pour la longueur axiale

$H_K$ de la surface extérieure de tête (12) s'applique:

$$H_K = (0,025 \text{ à } 0,2) \, d_N, \text{ en particulier } H_K = (0,025 \text{ à } 0,12) \, d_N.$$

**10.** Rivet auto-poinçonneur selon l'une des revendications précédentes, dans lequel l'extrémité de tête de rivet du perçage de tige (8) est conçue de manière fermée, **caractérisé en ce que** l'extrémité fermée du perçage de tige (8) présente une surface de fond (24) conique, laquelle se prolonge dans la surface intérieure de tige (16) par le biais d'un rayon extérieur de perçage de tige $R_5$, et se termine dans un rayon intérieur de perçage de tige $R_6$, dans la région de l'axe central X.

**11.** Rivet auto-poinçonneur selon la revendication 10,
**caractérisé en ce que** l'angle de cône $\gamma$ de la surface de fond conique (24) mesure entre 110° et 140°, en particulier entre 110° et 130°.

**12.** Rivet auto-poinçonneur selon l'une des revendications 10 ou 11, **caractérisé en ce que** pour le rayon extérieur de perçage de tige $R_5$ s'applique:

$$R_5 = 0,7 \pm 0,5 \text{ mm, en particulier } R_5 = 0,8 \pm 0,3 \text{ mm.}$$

**13.** Rivet auto-poinçonneur selon l'une des revendications 10 à 12, **caractérisé en ce que** pour le rayon intérieur du perçage de tige $R_6$ s'applique:

$$R_6 = 0,9 \pm 0,5 \text{ mm, en particulier } R_6 = 0,8 \pm 0,3 \text{ mm.}$$

**14.** Rivet auto-poinçonneur selon l'une des revendications 10 à 13, **caractérisé en ce que** pour la profondeur $t_B$ du perçage de tige (8), de l'extrémité de pied de rivet jusqu'à l'endroit où les prolongements prévus de la surface de fond conique (24) et de la surface intérieure de tige (16) se coupent, s'applique:

$$t_B \geq 0,2 \, d_N, \text{ en particulier } t_B \geq 0,3 \, d_N.$$

**15.** Rivet auto-poinçonneur selon l'une des revendications 10 à 14, **caractérisé en ce que** pour l'épaisseur $D_K$ de la tête de rivet (4) sur l'axe central X s'applique:

$$D_K \geq 0,15 \, d_N.$$

**16.** Rivet auto-poinçonneur selon l'une des revendications 1 à 9, **caractérisé en ce que** le perçage de tige est ouvert à l'extrémité de tête de rivet.

**17.** Rivet auto-poinçonneur selon l'une des revendications précédentes, **caractérisé en ce qu'**il est conçu comme élément fonctionnel, en particulier comme boulon estampé ou comme écrou estampé.

**18.** Rivet auto-poinçonneur selon l'une des revendications précédentes, **caractérisé en ce que** la tige de rivet (6; 6') possède une surface extérieure de tige (14) essentiellement cylindrique ou une surface extérieure de tige pourvu d'une cannelure axiale (42).

**19.** Matrice pour la fabrication d'un assemblage riveté estampé, au moyen d'un rivet auto-poinçonneur, en particulier selon l'une des revendications précédentes, avec un espace creux de matrice (34), lequel est délimité par un fond de matrice (36) et une surface périphérique cylindrique (38), **caractérisée en ce que,** pour le diamètre de matrice $D_M$ et la profondeur $T_M$ de l'espace creux de matrice (34), s'applique:

$$D_M = d_N + (0,6 \text{ à } 1,5)\ 2t_M, \text{ en particulier } d_N + (0,7 \text{ à } 1,2)\ 2t_M$$

$$T_M = (1,0 \text{ à } 2,5)\ t_M, \text{ en particulier } T_M = (1,1 \text{ à } 2,2)\ t_M$$

pour les pièces d'assemblage réalisées à partir de matériaux présentant une bonne capacité de déformation, en particulier pour les alliages forgeables, où $d_N$ est le diamètre extérieur de tige de la tige de rivet (6) du rivet auto-poinçonneur (2) et $t_M$ l'épaisseur de la pièce d'assemblage (26) côté matrice, et

$$D_M \leq 2,2\ d_N$$

$$T_M \leq 0,15\ D_M$$

pour les pièces d'assemblage réalisées à partir d'alliages de fonderie à faible capacité de déformation.

**20.** Matrice pour la fabrication d'un assemblage riveté estampé, au moyen d'un rivet auto-poinçonneur, en particulier selon l'une des revendications précédentes, avec un espace creux de matrice (34), lequel est délimité par un fond de matrice (36) et une surface périphérique cylindrique (38), **caractérisée en ce que** la matrice (30') comporte un renfoncement central (40) dans le fond de matrice, destiné à l'élimination de la pression pendant le procédé d'assemblage.

**21.** Matrice selon la revendication 20, **caractérisée en ce que** le renfoncement central (40) présente un diamètre $D_{EB} \leq 0,5\ D_M$ et une profondeur $T_{EB} \geq 0,2\ d_N$, en particulier $T_{EB} \geq 0,3\ d_N$.

**22.** Matrice selon la revendication 20, **caractérisée en ce que** le renfoncement central (40) présente un diamètre $D_{EB} \geq d_i$ et une profondeur $T_{EB} \geq 0,1\ t_M$.

**23.** Procédé pour la fabrication d'un assemblage riveté estampé entre deux pièces d'assemblage (26; 28), au moyen d'un rivet auto-poinçonneur, en particulier un rivet auto-poinçonneur selon l'une des revendications 1 à 18, **caractérisé en ce qu'**une matrice selon la revendication 19 est utilisée.

**24.** Procédé pour la fabrication d'un assemblage riveté estampé entre deux pièces d'assemblage (26; 28) au moyen d'un rivet auto-poinçonneur, en particulier un rivet auto-poinçonneur selon l'une des revendications 1 à 18, **caractérisé en ce qu'**une matrice selon l'une des revendications 20 à 22 est utilisée.

**25.** Utilisation d'une matrice selon l'une des revendications 19 à 22, pour la fabrication d'un assemblage riveté estampé entre deux pièces d'assemblage (26; 28).

Fig. 1

Fig. 2

Fig. 3

Fig. 4

Fig. 5

Fig. 6

Fig. 7

$D_M$

$D_{EB}$

36'

$R_{EB}$

$T_M$

$T_{EB}$

30'

40

Fig. 8

2'

6'

42

$\overline{IX}$          $\overline{IX}$

Fig. 9

42

2'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4333052
- EP 0720695 A
- EP 1064466 A
- DE 20001103 U1
- EP 1229254 A
- EP 1387093 A
- US 20040068854 A1
- DE 4431769
- DE 20319610 U1
- JP 2001159409 A
- JP 09317730 A
- ZA 9108340